# EUROPÄISCHE PATENTSCHRIFT

(11) **EP 3 337 635 B1**
(45) Veröffentlichungstag und Bekanntmachung des Hinweises auf die Patenterteilung: **25.11.2020**
(21) Anmeldenummer: 16763714.9
(22) Anmeldetag: 10.08.2016
(51) Int. Cl.: B23K 11/11, B23K 11/30, B23K 11/36, B23K 11/31

(54) **VORRICHTUNG UND VERFAHREN ZUR NIEDEROHMIGEN VERSCHWEISSUNG VON BLECHEN MIT HOHER TAKTZAHL**
DEVICE AND METHOD FOR THE LOW-RESISTANCE WELDING OF METAL SHEETS WITH A HIGH CYCLE RATE
DISPOSITIF ET PROCÉDÉ DE SOUDAGE DE TÔLES À FAIBLE VALEUR OHMIQUE À UNE VITESSE DE PRODUCTION ÉLEVÉE

(30) Priorität: 17.08.2015 DE 102015010734
(43) Veröffentlichungstag der Anmeldung: 27.06.2018
(73) Patentinhaber: Grenzebach Maschinenbau GmbH, 86663 Asbach-Baeumenheim (DE)
(72) Erfinder: WEIGL, Markus, 86609 Donauwörth (DE)
(74) Vertreter: Kindermann, Peter
(86) Internationale Anmeldenummer: PCT/DE2016/000313
(87) Internationale Veröffentlichungsnummer: WO 2017/028833

(56) Entgegenhaltungen:
- EP-A1- 0 005 880
- WO-A1-2016/169668
- DE-A1-102009 049 329
- DE-U1-202004 020 166
- JP-A- 2009 045 657

## Beschreibung

Die Erfindung betrifft ein Verfahren zur niederohmigen Verschweißung von Blechen mit hoher Taktzahl.

Zum Stand der Technik ist aus der Patentliteratur aus der Deutschen Offenlegungsschrift 19 02 569 ein Verfahren zum Widerstandsschweißen und - löten bzw. Lichtbogenschweißen von beschichteten Blechen und Maschinen dazu, bekannt.

Nach dem Oberbegriff des Anspruchs 1 wird hier ausgegangen von einem Verfahren zum Widerstands - Schweißen bzw. zum elektrischen Widerstandslöten von Blechen und metallischen Körpern.

Dieses Verfahren ist, nach dem Kennzeichen des Anspruchs 1, dadurch gekennzeichnet, dass spitze Fortsätze (z.B. durch Körnung, Prägen, Fräsung und dergl.) in Richtung zum Dekorblech, das z.B. , beidseits voll beschichtet ist, am anzuschweißenden Blech ausgebildet sind, die durch einen Vorwärmstrom, der zunächst durch das anzuschweißende (obere) Blech geleitet ist, so stark erwärmt sind, dass hierdurch die innere Beschichtung des Dekorblechs schmilzt (oder zerstört wird), die spitzen Fortsätze metallischen Kontakt mit dem Dekorblech erhalten und durch automatische Steuerung oder sonstige Schaltungen und Regulierungen ein Schweißstrom mit optimalen Schweißdaten, die eine Verletzung der Dekorschicht ausschließen, über die Berührungsstelle, die Bleche verschweißend, in das Dekorblech geleitet wird.

Weiter ist aus der neueren DE 20 2004 020 166 U1 eine Schweißvorrichtung mit einem Schweißteil bekannt.

In dieser Druckschrift wird von einem Stand der Technik ausgegangen, bei dem Impuls - Schweißverfahren mit Presskrafteinwirkung auf die zu verschweißenden Bauteile bekannt ist. In diesem Zusammenhang wird zum Beispiel an konventionelle Kondensatorentladungs - Schweißverfahren nebst zugehörigen Schweißvorrichtungen gedacht. Bei solchen Impuls-Schweißverfahren werden die zusammen gepressten Werkstücke von einem Impulsstrom durchflössen, wobei sie am Kontaktbereich in einen teigigen Zustand übergehen und sich miteinander verbinden. Um eine ausreichend hohe Stromkonzentration zu erreichen, heißt es dort weiter, werden die Kontaktstelen der Werkstücke möglichst klein gehalten, wobei zum Beispiel ein Punkt - oder Linienkontakt besteht. Bei Blechen werden zu diesem Zweck an einen oder beiden Blechen in einer Bauteilvorbereitung Buckel angebracht oder angeformt. Dies erfordert einen zusätzlichen Aufwand.

Weiter wird bezüglich des Standes der Technik auf die DE 40 38 016 A1 und die DE 19 44 614 A1 eingegangen.

Aus der Druckschrift JP 2009 045657A ist ein Verfahren zur niederohmigen Verschweißung von Blechen mit hoher Taktzahl bekannt, wobei ein federelastisches Koppeln eines Niederhalters mit der Elektrode dem Sicherstellen eines definierten Anpressdrucks der Fügeteile untereinander dient.

Aus der Druckschrift DE 10 2009 049329 A1 ist ferner ein Verfahren und eine Vorrichtung zur Steuerung einer Positioniervorrichtung zum Schweißen bekannt, wobei Kraftmess-Sensoren zum Einsatz kommen.

Schließlich zeigt die Druckschrift EP 0 005 880 A1 ein Verfahren zum Verschweißen von Metallteilen mit hoher Wärme und elektrischer Leitfähigkeit, wobei wiederum ein federelastisches Koppeln mittels einer Andruckfeder beschrieben ist.

Der vorliegenden Erfindung liegt die Aufgabe zugrunde, ein Verfahren zur niederohmigen Verschweißung von Blechen mit hoher Taktzahl zu schaffen, wobei die zu erzeugende Prägung unabhängig von einem zur sicheren Übertragung eines Schweißstroms notwendigen Anpressdrucks der Elektroden realisierbar ist.

Erfindungsgemäß wird diese Aufgabe einerseits durch die Maßnahmen des Patentanspruchs 1 und alternativ durch die Maßnahmen des Patentanspruchs 2 gelöst.

Eine Vorrichtung zur Durchführung der beiden erfindungsgemäßen alternativen Verfahren wird im Folgenden näher beschrieben.

Es zeigen im Einzelnen:
Fig.1: einen Querschnitt durch die Vorrichtung,
Fig.2: eine Schnittdarstellung aus dem Bereich der Prägeköpfe,
Fig.3: zwei Schnitt-Darstellungen aus dem Bereich des Schweißvorgangs, und
Fig.4: eine unmittelbare Schnittdarstellung der Schweißverbindung.

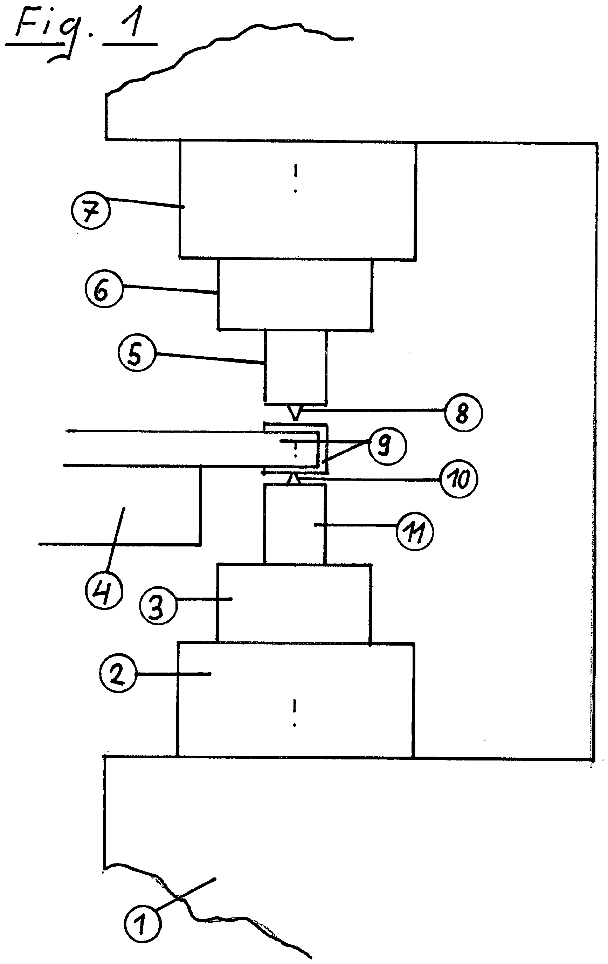

Die Fig.1: zeigt einen Querschnitt durch die Vorrichtung. Der zangenförmig gestaltete Grundkörper 1 der Schweißvorrichtung weist im Wesentlichen ein unteres Hubantriebselement 2 und ein oberes Hubantriebselement 7 auf zwischen denen mittels einer Fügepartner-Zufuhreinrichtung 4 zwei Fügepartner 9 für einen zu erfolgenden Schweißvorgang exakt positioniert zugeführt werden. Die hier gezeigten zu verschweißenden beiden Fügepartner 9 bestehen beispielhaft aus einem, im Schnitt gezeigten, länglichen Blechstreifen der mit einem anderen, u -förmig gebogenen, den länglichen Blechstreifen umklammernden, weiteren Blechstreifen verschweißt werden soll.

Unmittelbar an diesem Schweißvorgang beteiligt sind zwei, hier als Druckspitze zu erkennende, Prägeköpfe, nämlich der untere Prägekopf 10 und der obere Prägekopf 8. Diese beiden Prägeköpfe 10 und 8 sind direkt verbunden mit der entsprechenden unteren Schweißelektrode 11 und der oberen Schweißelektrode 5.

Die beiden Schweißelektroden 11 und 5 sind wiederum jeweils gehalten von der entsprechenden unteren Elektroden - Halteeinrichtung 3 und der oberen Elektroden - Halteeinrichtung 6.

Hierbei weisen sowohl die untere Elektroden - Halteeinrichtung 3 als auch die obere Elektroden - Halteeinrichtung 6 jeweils eine eigene, unabhängig voneinander wirkende Kraft - Messeinrichtung auf.

Betätigt werden die beiden Elektroden - Halteeinrichtungen von dem unteren Hubantriebselement 2 und dem oberen Hubantriebselement 7.

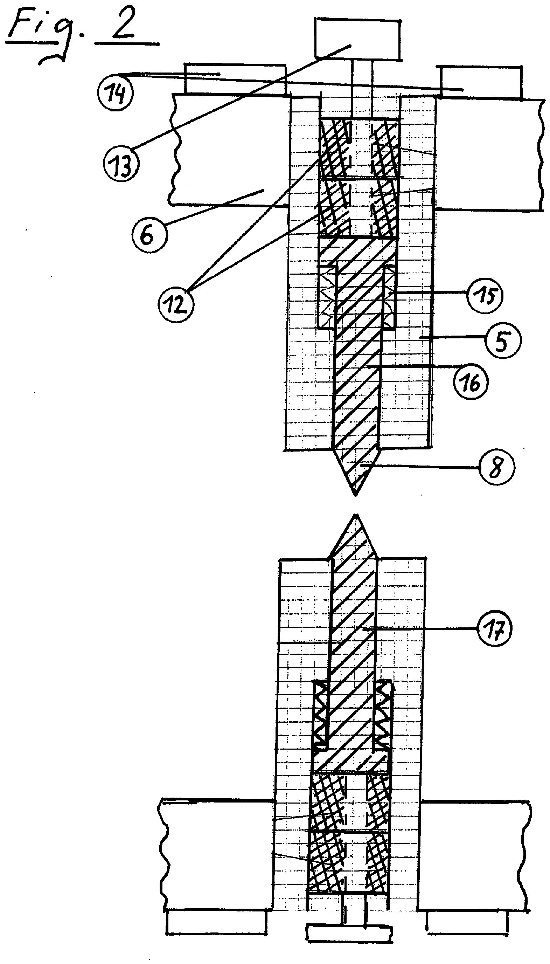

Die Fig.2: zeigt eine Schnittdarstellung aus dem Bereich der Prägeköpfe. Ausgehend von der aus der Fig.1 bekannten oberen Schweißelektrode 5 und der oberen Elektroden - Halteeinrichtung 6 mit ihrer Kraft - Messeinrichtung ist hier beispielhaft neben dem oberen Prägekopf 8 der Schaft 16 des oberen Prägekopfs 8 mit seinem Vorspannelement 15 zu erkennen. Über dem Schaft 16 des oberen Prägekopfs sind zwei kraftmäßig hintereinander geschaltete Stellelemente 12 dargestellt mit deren Hilfe die Vorspannung des Vorspannelements 15, zum Beispiel als Federvorspannung, eingestellt werden kann. Als Stellelemente 12 können zum Beispiel Piezoelektrische - Elemente Verwendung finden. Zur Messung dieser Vorspannung dient ein Kraft - Messsensor 13. Mittels eines weiteren Kraft - Messsensors 14 kann der Elektrodendruck gemessen werden der von dem oberen Hubantriebselement 7 auf die obere Schweißelektrode 6 ausgeübt wird .Im unteren Teil der Fig.2 ist mit 17 der entsprechende Schaft des unteren Prägestempels bezeichnet. Auch die übrigen, nicht gezeigten, Bauteile wie die Stellelemente 12, der Kraft - Messsensor 13, das Vorspannelement 15 und der Kraft - Messsensor 14 für den Elektrodendruck entsprechen der im oberen Teile der Fig.2 beschriebenen Anordnung.

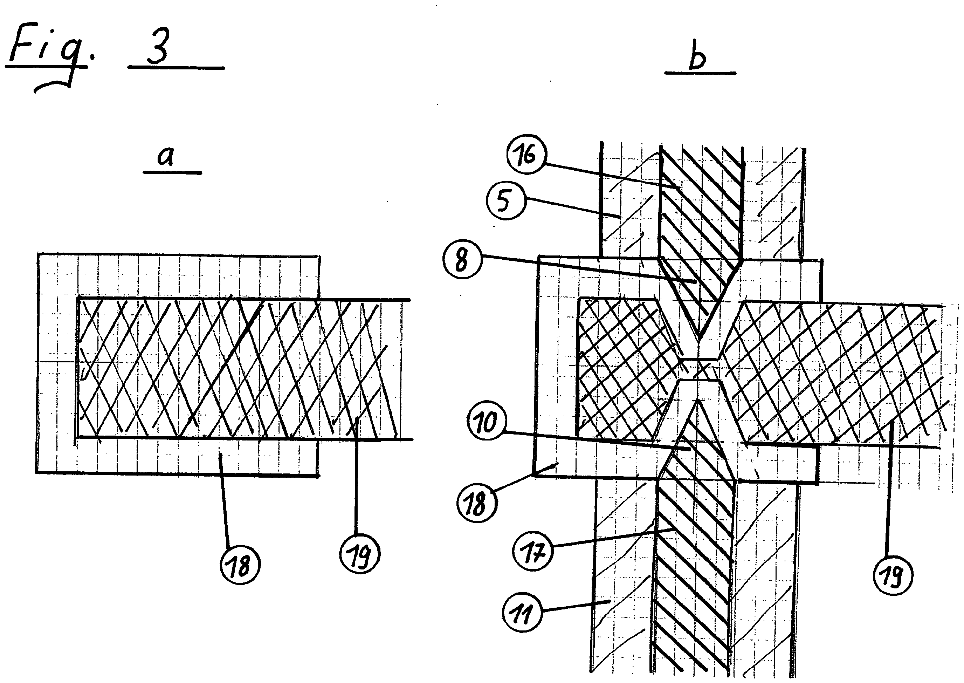

Die Fig.3 zeigt zwei Schnitt - Darstellungen aus dem Bereich des Schweißvorgangs. In der linken Fig.3a sind als Beispiel für zu verschweißende Bleche als ein erster Fügepartner ein Blech aus Metallstrukturmaterial 19 und als weiterer zweiter Fügepartner ein, dieses Blech 19 als eine u - förmig umklammernde Metalleinfassung 18, dargestellt. Diese Darstellung entspricht, lediglich seitenverkehrt, den in der Fig.1 gezeigten Verhältnissen.

In der rechten Fig.3b sind die in der Fig.3a gezeigten Fügepartner im Schnitt nach der mechanischen Einwirkung durch die Prägeköpfe gezeigt.

Das hier beispielhaft gezeigte Blech aus Metallstrukturmaterial 19 ist dadurch gekennzeichnet, dass, wie sein Name schon sagt, es im Wesentlichen aus einer gitterähnlichen Metallstruktur mit dazwischenliegenden Hohlräumen besteht. Ein solches Blech setzt einer Druckbelastung mittels eines spitzen Prägekopfs naturgemäß weniger Widerstand entgegen als ein entsprechendes Blech aus einem normalen Metall. Dies ist in der Fia.3b dadurch zu erkennen, dass das Metallstrukturmaterial 19 durch die Krafteinwirkung der Schäfte 17 und 16 der beiden Prägeköpfe 10 und 8 in der Mitte stark deformiert ist, während die Metalleinfassung 18 eher ein normales Deformierungs - Verhalten zeigt. Die untere Schweißelektrode 11 und die obere Schweißelektrode 5 sind in dieser Darstellung noch stromlos.

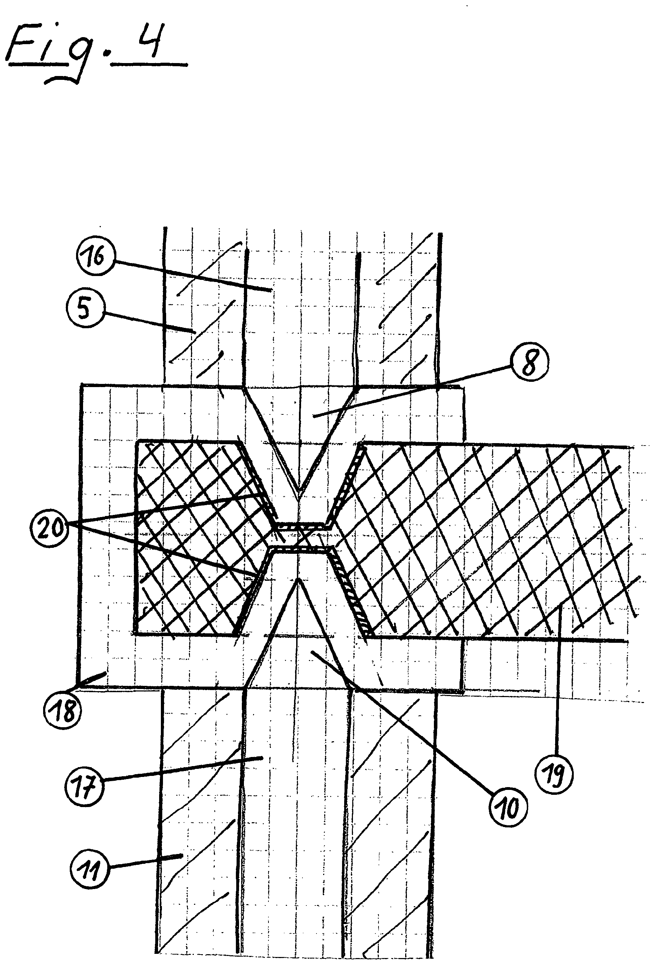

Die Fig.4 zeigt eine unmittelbare Schnittdarstellung der Schweißverbindung. Diese Darstellung unterscheidet sich von der Fig.3b dadurch, dass nach dem Fluss eines Schweißstroms sich an den mechanischen Verbindungsflächen des Metallstrukturmaterials 19 und der Metalleinfassung 18 eine innige Schweißverbindung 20 gebildet hat.

Die Steuerung und Reglung des beschriebenen Schweißprozesses erfolgt einmal mittels der Stellelemente 12 die die Vorspannung bestimmen mit der der jeweilige Prägekopf auf den entsprechenden Fügepartner einwirkt, wobei die Messung der Vorspannung mittels des entsprechenden Kraft - Messsensors 13 erfolgt.

Weiter wird der Druck der Schweißelektroden auf die Fügepartner mittels der entsprechenden Hubantriebselemente ausgeübt und mittels der entsprechenden Kraft - Messsensoren 14 gemessen.

Die Steuerung und die Art des Schweißstroms richten sich nach der Art und Ausgestaltung der jeweiligen Fügepartner, wobei die Taktzahl der Zufuhreinrichtung der Fügepartner die Taktzahl der Schweißvorrichtung bestimmt. Hierbei wird eine Taktzahl von mindestens 1200 Schweißvorgängen pro Stunde erreicht.

Die Höhe des Schweißstroms wird niedrig gehalten, wobei darauf geachtet wird, dass die Schweiß - Elektroden nicht mit Material der Fügepartner beschichtet sind um ein Anheften der Fügepartner an die Schweißelektroden zu vermeiden. Somit lässt sich eine hohe Zuverlässigkeit und eine hohe Taktzahl erreichen.

Der Druck eines Prägekopfs kann während des Bearbeitungsprozesses durch ein Stellelement unabhängig von der Schweißelektrode und dem Elektrodendruck auf den Fügepartner eingestellt werden.

Der jeweilige Prägekopf erzeugt in dem Fügepartner eine Zündspitze an der entlang die spätere Schweißnaht verläuft. Auf diese Weise wird eine gute Leitfähigkeit der Verschweißung erreicht. Ein Prägekopf kann aus Keramik oder einem anderen harten schlecht leitendem Material sein. Prägespitzen verhindern ein Verschieben der Fügepartner beim Schweißen, was bei der erreichbaren hohen Taktzahl wichtig ist. Ein Prägekopf kann unabhängig von der Elektrode nach dem Prägevorgang, je nach der Art der Materialpaarung, den Druck auf den Fügepartner erhöhen oder verringern oder sich aus der Schweißzone ganz herausziehen.

An einem Schweißvorgang können beide Schweißelektroden mit ihren Prägeköpfen und dem entsprechenden Hubantriebselement beteiligt sein, es kann jedoch auch eine Schweißelektrode mit ihrem Prägekopf quasi statisch bleiben und sich nicht mit ihrem Prägekopf und dem betreffenden Hubantriebselement am Schweißvorgang beteiligen. Dies betrifft natürlich nicht die elektrische Funktion der Schweißelektroden.

Des Weiteren kann in einer, nicht gezeigten, Sonderbauform zusätzliche die Funktion einer Messung des ohmschen Widerstandes vorgesehen sein, bevor der eigentliche Schweißvorgang geschaltet wird. Auf diese Weise kann durch die Berührung der Spitzen der Prägeköpfe mit den Fügpartnern vor dem eigentlichen Schweißvorgang abgeschätzt werden, welchen ohmschen Widerstand später die fertige Schweißverbindung aufweist. Sollte diese Widerstandsmessung nicht dem gewünschten Wert entsprechen, kann mittels einer zusätzlichen Druckerhöhung auf die Fügepartner das Ergebnis der Schweißung vor dem Schweißvorgang noch beeinflusst werden. Referenzwerte für eine entsprechende Abschätzung werden im konkreten Fall mittels entsprechender Messreihen gewonnen.

Dadurch lässt sich die Zuverlässigkeit der gesamten Anlage wesentlich erhöhen.

Fügepartner sind bevorzugt Materialien wie Strukturmetalle, die im Inneren Hohlräume aufweisen (beispielsweise Metallschäume).

Es können jedoch selbstverständlich auch andere Materialien als Fügepartner verwendet werden.

Die komplexe Steuerung der beschriebenen Bewegungsabläufe erfordert ein spezielles Steuerungsprogramm.

### Bezugszeichenliste

- 1: Grundkörper der Schweißvorrichtung
- 2: unteres Hubantriebselement
- 3: untere Elektroden - Halteeinrichtung mit Kraft - Messeinrichtung
- 4: Fügepartner - Zufuhreinrichtung
- 5: obere Schweißelektrode
- 6: obere Elektroden - Halteeinrichtung mit Kraft - Messeinrichtung
- 7: oberes Hubantriebselement
- 8: oberer Prägekopf
- 9: Fügepartner
- 10: Unterer Prägekopf
- 11: untere Schweißelektrode
- 12: Stellelemente für oberen Prägestempel
- 13: Kraft - Messsensor für Prägestempel
- 14: Kraft - Messsensor für Elektrodendruck
- 15: Vorspannelement (Federelement)
- 16: Schaft des oberen Prägestempels
- 17: Schaft des unteren Prägestempels
- 18: Metalleinfassung (Kontaktblech)
- 19: Metallstrukturmaterial
- 20: Schweißverbindung

## Patentansprüche

1. Verfahren zur niederohmigen Verschweißung von Blechen mit hoher Taktzahl mit den folgenden Merkmalen:
a) die zu verschweißenden Fügepartner werden von einer Fügepartner-Zufuhreinrichtung (4) zwischen eine untere Schweißelektrode (11) und eine obere Schweißelektrode (5) befördert, wo sie von einem und/oder zwei Prägeköpfen (10, 8) mit einer bestimmten, einstellbaren Vorspannung fixiert werden,
b) die untere Schweißelektrode (11) und die obere Schweißelektrode (5) werden von beiden Seiten auf die beiden Fügepartner gedrückt, wobei jeweils der Elektrodendruck gemessen wird,
c) der, den jeweiligen Fügepartnern angemessene, Schweißstrom fließt und verschweißt die Fügepartner,
d) die beiden Schweißelektroden mit ihren jeweiligen Prägeköpfen (10, 8) werden mittels eines entsprechenden Hubantriebselements (2, 7) zurückgezogen und die Fügepartner-Zufuhreinrichtung (4) liefert das Schweißergebnis in einen Bereitstellungsraum, wobei
ein Prägekopf (10, 8) während des Prozesses mittels eines Stellelementes (12) unabhängig von der jeweiligen Schweißelektrode (11, 5) und dem Elektrodendruck auf den Fügepartner eingestellt wird.

2. Verfahren zur niederohmigen Verschweißung von Blechen mit hoher Taktzahl mit den folgenden Merkmalen:
a) die zu verschweißenden Fügepartner werden von einer Fügepartner-Zufuhreinrichtung (4) zwischen eine untere Schweißelektrode (11) und eine obere Schweißelektrode (5) befördert, wo sie von einem und/oder zwei Prägeköpfen (10, 8) mit einer bestimmten, einstellbaren Vorspannung fixiert werden,
b) die untere Schweißelektrode (11) und die obere Schweißelektrode (5) werden von beiden Seiten auf die beiden Fügepartner gedrückt, wobei jeweils der Elektrodendruck gemessen wird,
c) der, den jeweiligen Fügepartnern angemessene, Schweißstrom fließt und verschweißt die Fügepartner,
d) die beiden Schweißelektroden mit ihren jeweiligen Prägeköpfen (10, 8) werden mittels eines entsprechenden Hubantriebselements (2, 7) zurückgezogen und die Fügepartner-Zufuhreinrichtung (4) liefert das Schweißergebnis in einen Bereitstellungsraum, wobei
ein Prägekopf (10,8) unabhängig von der Stellung einer Elektrode nach dem Prägevorgang je nach der Materialpaarung den Druck auf den jeweiligen Fügepartner erhöht oder verringert oder sich ganz aus der Schweißzone herauszieht.

## Claims

1. Method for the low-resistance welding of metal sheets at a high cycle rate, said method having the following features:
a) the joining partners to be welded are conveyed by a joining-partner feeding device (4) to between a lower welding electrode (11) and an upper welding electrode (5) where said joining partners are fixed by one and/or two embossing heads (10, 8) at a specific, settable preload,
b) the lower welding electrode (11) and the upper welding electrode (5) are pressed onto the two joining partners from both sides, wherein the electrode pressure is measured in each case
c) the welding current appropriate for the respective joining partners flows and welds the joining partners,
d) the two welding electrodes with the respective embossing heads (10, 8) thereof are retracted by means of a corresponding lift drive element (2, 7), and the joining-partner feeding device (4) delivers the welding result into a temporary storage area, wherein
an embossing head (10, 8) by means of an actuating element (12) is set in relation to the joining partner during the process, independently of the respective welding electrode (11, 5) and the electrode pressure.

2. Method for the low-resistance welding of metal sheets at a high cycle rate, said method having the following features:
a) the joining partners to be welded are conveyed by a joining-partner feeding device (4) to between a lower welding electrode (11) and an upper welding electrode (5) where said joining partners are fixed by one and/or two embossing heads (10, 8) at a specific, settable preload,
b) the lower welding electrode (11) and the upper welding electrode (5) are pressed onto the two joining partners from both sides, wherein the electrode pressure is measured in each case,
c) the welding current appropriate for the respective joining partners flows and welds the joining partners,
d) the two welding electrodes with the respective embossing heads (10, 8) thereof are retracted by means of a corresponding lift drive element (2, 7), and the joining-partner feeding device (4) delivers the welding result into a temporary storage area, wherein
an embossing head (10, 8), depending on the material pairing, increases or reduces the pressure on the respective joining partner or is extracted entirely from the welding zone, independently of the position of an electrode after the embossing procedure.

## Revendications

1. Procédé de soudage à basse impédance de tôles métalliques effectué à cadences élevées, le procédé présentant les caractéristiques suivantes :
a) les parties à assembler par soudage sont transportées par un dispositif d'amenée de parties à assembler (4) entre une électrode de soudage inférieure (11) et une électrode de soudage supérieure (5) où elles sont fixées par une et/ou deux têtes de matriçage (10, 8) avec une précontrainte déterminée réglable,
b) l'électrode de soudage inférieure (11) et l'électrode de soudage supérieure (5) sont pressées des deux côtés sur les deux parties à assembler, la pression d'électrode étant mesurée à chaque fois,
c) le courant de soudage adapté aux parties à assembler respective circule et soude les parties à assembler,
d) les deux électrodes de soudage pourvues de leurs têtes de matriçage respectives (10, 8) sont retirées au moyen d'un élément d'entraînement de levage correspondant (2, 7) et le dispositif d'amenée de parties à assemblage (4) délivre le résultat de soudage à une salle de préparation,
une tête de matriçage (10, 8) étant réglée pendant le processus au moyen d'un élément de réglage (12) indépendamment de l'électrode de soudage respective (11, 5) et de la pression d'électrode exercée sur la partie à assembler.

2. Procédé de soudage à basse impédance de tôles métalliques effectué à cadences élevées, le procédé présentant les caractéristiques suivantes :
a) les parties à assembler par soudage sont transportées par un dispositif d'amenée de parties à assembler (4) entre une électrode de soudage inférieure (11) et une électrode de soudage supérieure (5) où elles sont fixées par une et/ou deux têtes de matriçage (10, 8) avec une précontrainte déterminée réglable,
b) l'électrode de soudage inférieure (11) et l'électrode de soudage supérieure (5) sont pressées des deux côtés sur les deux parties à assembler, la pression d'électrode étant mesurée à chaque fois,
c) le courant de soudage adapté aux parties à assembler respective circule et soude les parties à assembler,
d) les deux électrodes de soudage pourvues de leurs têtes de matriçage respectives (10, 8) sont retirées au moyen d'un élément d'entraînement de levage correspondant (2, 7) et le dispositif d'amenée de parties à assembler (4) délivre le résultat de soudage à une salle de préparation,
une tête de matriçage (10, 8) augmentant ou diminuant la pression exercée sur la partie à assembler respective ou se retirant complètement de la zone de soudage, indépendamment de la position d'une électrode après le processus de matriçage, en fonction de l'appariement de matières.
